# EUROPÄISCHE PATENTSCHRIFT

(11) **EP 4 345 337 B1**
(45) Veröffentlichungstag und Bekanntmachung des Hinweises auf die Patenterteilung: **09.04.2025**
(21) Anmeldenummer: 23191568.7
(22) Anmeldetag: 16.08.2023
(51) Int. Cl.: F16F 7/08, F16F 7/09

(54) **REIBUNGSDÄMPFER**
FRICTION DAMPER
AMORTISSEUR À FRICTION

(30) Priorität: 20.09.2022 DE 102022209864
(43) Veröffentlichungstag der Anmeldung: 03.04.2024
(73) Patentinhaber: SUSPA GmbH, 90518 Altdorf (DE)
(72) Erfinder: Dammann, Thorsten, 91227 Leinburg (DE); Pelczer, Andreas, 90518 Altdorf (DE); Weder, Michael, 90455 Nürnberg (DE)
(74) Vertreter: Rau, Schneck & Hübner Patentanwälte Rechtsanwälte PartGmbB

(56) Entgegenhaltungen:
- EP-A1- 3 869 062
- US-A1- 2008 256 986
- US-A1- 2015 354 653
- US-A1- 2018 073 589

## Beschreibung

Die vorliegende Patentanmeldung nimmt die Priorität der deutschen Patentanmeldung DE 10 2022 209 864.1 in Anspruch.

Die Erfindung betrifft einen Reibungsdämpfer.

Reibungsdämpfer für Waschmaschinen sind bekannt aus US 2018/0073589 A1, US 2015/0354653 A1 und US 2008/0256986 A1.

Ein richtungsabhängiger Reibungsdämpfer ist aus EP 3 869 062 A1 bekannt. Dieser Reibungsdämpfer weist eine Schalt-Einheit auf, mit der eine vom Reibungsdämpfer erzeugte Reibungskraft veränderlich festgelegt werden kann. Dazu weist die Schalt-Einheit einen schaltbaren Aktuator und ein damit mechanisch gekoppeltes Verriegelungselement auf.

Es ist die Aufgabe der vorliegenden Erfindung, das veränderliche Festlegen der Reibungskraft und damit die Anwendbarkeit des Reibungsdämpfers zu verbessern.

Diese Aufgabe ist erfindungsgemäß gelöst durch einen Reibungsdämpfer mit den im Anspruch 1 angegebenen Merkmalen.

Erfindungsgemäß wurde erkannt, dass bei einem Reibungsdämpfer die Reibungskraft vorteilhaft veränderlich festgelegt werden kann, wenn eine Schalt-Einheit eine Kraftübertragungseinheit aufweist, die einen Aktuator mit einem Verriegelungselement mechanisch vorteilhaft koppelt. Die Kraftübertragungseinheit umfasst eine Gewindespindel, mit der eine exakte Positionierung des Verriegelungselements mittels des schaltbaren Aktuators gewährleistet ist. Die Gewindespindel ermöglicht insbesondere eine robuste Kraftübertragung von dem Aktuator auf das Verriegelungselement.

Der Aktuator ist mindestens einfachwirkend und kann zweifachwirkend ausgeführt sein, ermöglicht also eine aktive Schaltung in verschiedene, insbesondere entgegengesetzte Richtungen, insbesondere in entgegengesetzte Linearrichtungen. Die Betätigung des Verriegelungselements entlang einer Verlagerungsrichtung ist dadurch vereinfacht. Insbesondere ist der Aktuator so ausgeführt, dass er zumindest in einer Richtung aktiv geschaltet werden kann und in der entgegengesetzten Richtung eine Betätigung des Verriegelungselements jedenfalls nicht behindert. Insbesondere kann das Verriegelungselement in der entgegengesetzten Richtung durch äußere Krafteinwirkung verlagert werden.

Alternativ kann der Aktuator einfachwirkend ausgeführt sein, also nur in einer der beiden Linearrichtungen aktiv geschaltet werden.

Der Reibungsdämpfer eignet sich insbesondere zur Anwendung in einer Waschmaschine oder in einem Wäschetrockner.

Die Reibungskraft wird von einer Reibungs-Einheit richtungsabhängig erzeugt. Die Reibungskraft wirkt auf einen Stößel, der entlang einer Längsachse eines Gehäuses des Reibungsdämpfers verlagerbar ist. Die von der Reibungs-Einheit erzeugte Reibungskraft ist richtungsabhängig, insbesondere abhängig von der Verlagerungsrichtung des Stößels, also entlang einer Auszugsrichtung des Stößels aus dem Gehäuse oder entlang einer Einschubrichtung des Stößels in das Gehäuse. Richtungsabhängig bedeutet, dass sich die Reibungskraft in Einschubrichtung betragsmäßig von der Reibungskraft in Auszugsrichtung unterscheidet. Insbesondere ist die in Auszugsrichtung wirkende Reibungskraft, die auch als Auszugsreibung bezeichnet wird, größer als die in Einschubrichtung wirkende Reibungskraft, die auch als Einschubreibung bezeichnet wird. Zum Erzeugen der Reibungskraft weist die Reibungs-Einheit mindestens einen Reibbelag auf, der an dem Stößel reibend anliegt.

Mittels der Schalt-Einheit kann die Reibungskraft veränderlich festgelegt werden. Insbesondere kann der Betrag der Reibungskraft, insbesondere stufenweise, veränderlich festgelegt werden. Insbesondere kann der Betrag der Reibungskraft richtungsabhängig und/oder richtungsunabhängig festgelegt werden. Insbesondere wird der Betrag der Reibungskraft in Auszugsrichtung festgelegt und ist insbesondere in Einschubrichtung veränderlich festlegbar, insbesondere entlang der Einschubrichtung zunehmend. Das bedeutet, dass bei einer Betätigung des Stößels in Einschubrichtung die Reibungskraft umso größer ist, je weiter der Stößel in das Gehäuse eingeschoben ist. Der Betrag der Reibungskraft ist insbesondere amplitudenabhängig, insbesondere in einem Verlagerungsbereich des Reibbelagsträgers zwischen einer Auszugsposition und einer Einschubposition. Die Auszugsposition und die Einschubposition des Reibbelagsträgers sind abhängig von der Betätigungsrichtung des Stößels. Der Stößel wird auch als Gleitrohr bezeichnet. Die Auszugsposition und die Einschubposition bilden jeweils sogenannte Extrempositionen des Reibbelagsträgers, die eine maximale bzw. minimale Reibungskraft festlegen. Der Betrag der Reibungskraft ist insbesondere richtungsabhängig.

Zum veränderlichen Festlegen der Reibungskraft wirkt die Schalt-Einheit mit der Reibungs-Einheit zusammen. Wenn die Reibungskraft mittels der Schalt-Einheit für eine Extremposition eines Reibbelagsträgers der Reibungs-Einheit festgelegt ist, ist die Reibungskraft insbesondere nicht richtungsabhängig, sondern richtungsunabhängig. Das bedeutet, dass die Reibungskraft in den Extrempositionen des Reibbelagsträgers richtungsunabhängig ist, wenn sie von der Schalt-Einheit festgelegt ist. In diesem Fall ist die Reibungskraft betragsmäßig in Einschubrichtung und in Auszugsrichtung identisch. Die Extrempositionen sind insbesondere eine Minimalposition und eine Maximalposition des Reibbelagsträgers. In der Minimalposition des Reibbelagsträgers wird insbesondere eine minimale Einschubkraft in Einschubrichtung auf den Stößel ausgeübt. In der Maximalposition wird insbesondere eine maximale Reibungskraft in Einschubrichtung auf den Stößel ausgeübt.

Zwischen den Extrempositionen kann der Reibbelagsträger auch mindestens eine Zwischenposition einnehmen. Der Reibbelagsträger kann auch mehrere verschiedene Zwischenpositionen einnehmen, insbesondere mindestens zwei Zwischenpositionen, insbesondere mindestens drei Zwischenpositionen, insbesondere mindestens vier Zwischenpositionen, insbesondere mindestens fünf Zwischenpositionen, insbesondere mindestens zehn Zwischenpositionen, insbesondere mindestens 15 Zwischenpositionen und insbesondere höchstens 20 Zwischenpositionen. Es ist insbesondere möglich, den Reibbelagsträger in der mindestens einen Zwischenposition mittels der Schalt-Einheit derart festzulegen, dass eine Betätigung des Stößels in Einschub-Richtung eine Verlagerung des Reibbelagsträgers erfolgt und somit sich die Reibungskraft in Einschub-Richtung verändert, wohingegen eine Betätigung des Stößels in Auszugsrichtung keine Verlagerung des Reibbelagsträgers bewirkt, so dass eine konstante Reibungskraft in Auszugsrichtung wirkt.

Besonders vorteilhaft ist es, mittels der Schalt-Einheit den Reibbelagsträger in einer Maximalposition zu verriegeln, sodass, insbesondere bei kleinen Hüben, eine maximale Reibungskraft gewährleistet ist. Ein kleiner Hub ist insbesondere dann gegeben, wenn die Axialbewegung des Stößels kleiner ist als 25 % des Maximalhubes des Reibungsdämpfers, insbesondere kleiner als 20 %, insbesondere kleiner als 15 %, insbesondere kleiner als 10 %, insbesondere kleiner als 5 % und insbesondere kleiner als 2 %.

Eine Ausführung der Reibungs-Einheit mit einem Reibbelagsträger, an dem der mindestens eine Reibbelag gehalten ist, wobei der Reibbelagsträger relativ zum Stößel zwischen einer Auszugsposition und einer Einschubposition verlagerbar angeordnet ist, ermöglicht eine unmittelbare und unkomplizierte Erzeugung der richtungsabhängigen Reibungskraft. Die Reibungs-Einheit weist insbesondere mehrere, insbesondere genau zwei, insbesondere mehr als zwei, insbesondere mindestens drei, insbesondere mindestens vier und insbesondere höchstens zwanzig Reibbeläge auf. Die Reibungs-Einheit wirkt passiv. Mittels eines Reibbelagsträgers, der insbesondere im Gehäuse angeordnet ist, kann die Auszugsreibung bzw. die Einschubreibung erzeugt werden, indem er zwischen einer Auszugsposition und einer Einschubposition verlagert wird. Durch die Veränderung des Reibbelagsträgers zwischen der Auszugsposition und der Einschubposition wird auch die Anordnung des mindestens einen Reibbelags relativ zum Stößel verändert. Dadurch verändert sich, insbesondere der Betrag, der Reibungskraft in Abhängigkeit der Verlagerungsrichtung des Stößels und insbesondere der sich daraus ergebenden Lageänderung des Reibbelagsträgers.

Die Schalt-Einheit dient insbesondere zum schaltbaren Verriegeln des Reibbelagsträgers, insbesondere in der Auszugsposition und/oder in der Einschubposition. Durch das Verriegeln ist die Verlagerbarkeit des Reibbelagsträgers in Einschubrichtung und/oder Auszugsrichtung blockiert. In den Extrempositionen des Reibbelagsträgers ist die Anordnung des mindestens einen Reibbelags relativ zum Stößel unabhängig von der Verlagerungsrichtung des Stößels festgelegt. In der blockierten Anordnung des Reibbelagsträgers sind Auszugsreibung und Einschubreibung betragsmäßig identisch.

Insbesondere wirkt die Reibungs-Einheit mit dem Stößel derart zusammen, dass der Reibbelagsträger bei einer Verlagerung des Stößels in Auszugsrichtung in die Auszugsposition und bei einer Verlagerung des Stößels in Einschubrichtung in die Einschubposition verlagert wird. Die Verlagerung der Reibungs-Einheit ergibt sich unmittelbar aus der Verlagerung des Stößels, insbesondere durch die Reibungskraft zwischen dem mindestens einen Reibbelag und dem Stößel. Die Verlagerung der Reibungs-Einheit ist integriert in den typischen Betätigungsablauf des Reibungsdämpfers.

Eine Ausführung des Verriegelungselements, das eine mit der Gewindespindel zusammenwirkende Spindelmutter aufweist, ermöglicht eine vorteilhafte Zusammenwirkung zwischen dem Verriegelungselement und der Gewindespindel. Durch eine Drehung der Gewindespindel wird automatisch eine Linearverlagerung des Verriegelungselements bewirkt. Dadurch, dass das Verriegelungselement eine Spindelmutter aufweist, die integral an dem Verriegelungselement ausgeführt ist, ist die Kraftübertragung besonders robust.

Eine Ausführung des Verriegelungselements gemäß Anspruch 2 gewährleistet eine effiziente Festlegung der Reibungskraft. Das Verriegelungselement liegt insbesondere unmittelbar an dem Reibbelagsträger an. Das Verriegelungselement kann insbesondere in eine beabstandete Anordnung bezüglich des Reibbelagsträgers verlagert werden. In dieser beabstandeten Anordnung ist die Verlagerbarkeit des Reibbelagsträgers unbehindert. Wenn das Verriegelungselement kontaktlos von dem Reibbelagsträger angeordnet ist, ist der Reibbelagsträger unverriegelt. In dieser Anordnung des Verriegelungselements erzeugt die Reibungs-Einheit die richtungsabhängige Reibungskraft. Zum verriegelten Anordnen weist das Verriegelungselement eine Anlagefläche auf, mit der das Verriegelungselement an einer Verriegelungsfläche des Reibbelagsträgers anliegt.

Eine Ausführung des Verriegelungselements gemäß Anspruch 3 ist unkompliziert und stabil. Insbesondere ist die Betätigung des Verriegelungselements und/oder das Zusammenwirken des Verriegelungselements mit dem Reibbelagsträger unkompliziert und mechanisch robust.

Eine Ausnehmung des Verriegelungselements gemäß Anspruch 4 vereinfacht das Verriegeln des Reibbelagsträgers. Der Reibbelagträger kann in und/oder an der Ausnehmung des Verriegelungselements angeordnet sein. Das Verriegelungselement kann entlang der Längsachse kollisionsfrei bezüglich des Reibbelagträgers verlagert werden. Ein derartiger Reibungsdämpfer ermöglicht eine kompakte und robuste, insbesondere platzsparende Konstruktion. Die Ausnehmung ist insbesondere als Öffnung, insbesondere als Durchgangsöffnung ausgeführt. Die Ausnehmung und insbesondere die Durchgangsöffnung weisen eine Grundfläche auf, die insbesondere parallel zur Längsachse und parallel zur Kippachse orientiert ist. Die Ausnehmung, insbesondere die Durchgangsöffnung, erstreckt sich an dem Verriegelungselement, insbesondere ausgehend von einer dem Reibbelagsträger zugewandten Unterseite, entlang einer zu der Grundfläche senkrecht orientierten Erstreckungsrichtung. Die Erstreckungsrichtung ist insbesondere senkrecht zur Längsachse und senkrecht zur Kippachse orientiert. Es ist auch denkbar, dass sich die Ausnehmung nicht vollständig durchgängig durch das Verriegelungselement erstreckt. Die Ausnehmung kann sich auch von einer Seitenfläche des Verriegelungselements aus, insbesondere entlang der Kippachse, erstrecken. Es ist insbesondere denkbar, dass an dem Verriegelungselement beidseitig Ausnehmungen vorgesehen sind, so dass der Reibbelagsträger das Verriegelungselement laschenartig umgreift und an dem Verriegelungselement vorbeigeführt ist.

Eine Ausführung des Aktuators gemäß Anspruch 5 ermöglicht eine kleinbauende Realisierung der Schalt-Einheit. Der Reibungsdämpfer weist ein reduziertes Gesamtgewicht auf, insbesondere elektronische, Ansteuerung und/oder die Regelbarkeit der Schalt-Einheit ist vereinfacht.

Durch Bestromung wird der Aktuator geschaltet und in eine Position verlagert, sodass das Verriegelungselement den Reibbelagsträger in einer Minimalposition mit minimaler richtungsunabhängiger Reibungskraft verriegelt. Der Aktuator kann auch derart angesteuert werden, dass eine oder mehrere Zwischenpositionen des Reibbelagsträgers verriegelt wird, in der eine größere als die minimale Reibkraft vorliegt. Zum gezielten veränderlichen Festlegen der Reibungskraft wird der Aktuator betätigt.

Ein Getriebe gemäß Anspruch 6 ermöglicht eine reduzierte Antriebsleistung zur Verlagerung des Verriegelungselements. Das Getriebe ist insbesondere ein Untersetzungsgetriebe. Insbesondere findet eine Untersetzung von dem Aktuator auf die Gewindespindel statt. Der Aktuator kann insbesondere ein Antriebsritzel an der Motorwelle aufweisen, die mit einer Innenverzahnung an der Getriebespindel zusammenwirkt. Die Innenverzahnung ist insbesondere in einem Hülsenabschnitt der Gewindespindel integral ausgeführt und insbesondere fest mit dem Bewegungsgewinde der Gewindespindel gekoppelt.

Eine Ausführung der Gewindespindel gemäß Anspruch 7 ist unkompliziert. Die Teileanzahl für die Ausführung des Reibungsdämpfers ist reduziert. Bei Ausfall der elektrischen Stromversorgung, insbesondere für den Aktuator, verbleibt das Verriegelungselement in Folge der Selbsthaltung, in seiner momentanen Position.

Die Selbsthaltung wird auch als Selbsthemmung bezeichnet. Die Selbsthemmung der Gewindespindel ist im Wesentlichen durch den Steigungswinkel des Bewegungsgewindes der Gewindespindel vorgegeben. Je kleiner der Steigungswinkel ausgeführt ist, desto größer ist die Tendenz zur Selbsthemmung. Der Steigungswinkel ist insbesondere abhängig von der Gewindeart, beispielsweise einem Trapezgewinde oder einem metrischen Gewinde.

Insbesondere ist der Steigungswinkel kleiner als der Reibungswinkel der Materialpaarung von Gewindespindel und korrespondierender Spindelmutter. Zur Verlagerung des Verriegelungselements muss insbesondere der Aktuator in beiden Richtungen bestromt werden. Zur Unterstützung des Schaltens in die Extremposition mit maximaler Reibungskraft kann mindestens ein Kraftspeicherelement vorhanden sein. In den jeweiligen Verriegelungspositionen kann eine dauerhafte Bestromung des Aktuators entfallen. Die zum Schalten erforderliche elektrische Antriebsleistung ist gering. Die Realisierung einer Failsafe-Funktion erfolgt über eine elektronische Schaltung und entsprechende elektrische Energiespeicherelemente, insbesondere Kondensatoren.

Aufgrund der Selbsthaltung ist der Energieverbrauch reduziert, da die Bestromung des Aktuators reduziert oder deaktiviert werden kann, wenn sich der Aktuator mit dem Verriegelungselement in der Minimalposition oder einer Zwischenposition befindet.

Alternativ kann die Gewindespindel gemäß Anspruch 8 ohne Selbsthemmung ausgeführt sein. Eine Gewindespindel ist insbesondere dann ohne Selbsthemmung ausgeführt, wenn der Steigungswinkel des Bewegungsgewindes größer ist als der Reibungswinkel der Materialpaarung von Gewindespindel und Spindelmutter. In diesem Fall ist eine Bestromung des Aktuators nur in einer Richtung, insbesondere in Richtung hin zu der minimalen Reibkraftposition erforderlich. Eine Unterstützung in entgegengesetzter Richtung, also in Richtung einer maximalen Reibkraftposition, ist möglich, aber nicht zwingend. Zum Halten des Verriegelungselements in der Minimalposition muss der Aktuator dauerhaft bestromt werden. Bei Wegfall der Spannung wird das Verriegelungselement und damit der Reibbelagsträger automatisch in die Maximalposition zurückverlagert, insbesondere durch das mindestens eine mechanische Kraftspeicherelement.

Eine Ausfallsicherungs-Einheit gemäß Anspruch 9 gewährleistet einen zuverlässigen und insbesondere beschädigungsfreien und/oder zerstörungsfreien Betrieb des Reibungsdämpfers im Fall einer unbeabsichtigten Störung. Eine derartige Störung liegt insbesondere dann vor, wenn der schaltbare Aktuator unbeabsichtigt deaktiviert wird. Eine unbeabsichtigte Deaktivierung ist beispielsweise für den Aktuator dann gegeben, wenn unbeabsichtigt die Bestromung entfällt beispielsweise bei Stromausfall. Ein Schalten des Aktuators ist dann nicht mehr möglich. Die Ausfallsicherungs-Einheit gewährleistet, dass das Verriegelungselement zuverlässig in eine Position verlagert wird, in der der Reibungsdämpfer eine maximale Reibungswirkung aufweist. Diese Position wird als Maximalposition bezeichnet.

Insbesondere kann das Getriebe derart ausgeführt sein, dass ein unbeabsichtigtes Zurückverlagern des Verriegelungselements, insbesondere in eine Ausgangsposition, verhindert wird. Bei einer derartigen Ausgestaltung weist der Reibungsdämpfer eine sogenannte Failsafe-Funktion auf.

Insbesondere wenn die Gewindespindel ohne Selbsthemmung ausgeführt ist, weist die Ausfallsicherungs-Einheit insbesondere mindestens ein Kraftspeicherelement auf, insbesondere zwei oder mehr Kraftspeicherelemente, das insbesondere als eine mechanische Feder, insbesondere als eine Schrauben-Druck-Feder ausgeführt ist. Das mindestens eine Kraftspeicherelement ist zwischen dem Verriegelungselement und dem Gehäuse angeordnet und in axialer Richtung abgestützt. Das mindestens eine Kraftspeicherelement vereinfacht die Zurückverlagerung des Verriegelungselements in eine Ausgangsposition. Insbesondere sind mehrere, insbesondere genau zwei, Kraftspeicherelemente vorgesehen. Die Kraftspeicherelemente sind insbesondere beidseitig der Gewindespindel und insbesondere diametral gegenüberliegend bezüglich der Gewindespindel angeordnet. Das mindestens eine Kraftspeicherelement ist insbesondere parallel zur Längsachse des Gehäuses orientiert und in axialer Richtung zwischen dem Verriegelungselement und dem Gehäuse angeordnet. Das mindestens eine Kraftspeicherelement ist insbesondere als Druckfeder, insbesondere in Form einer Schraubenfeder, ausgeführt.

Bei dem mindestens einen Kraftspeicherelement wird durch axiale Kompression eine Federkraft, also insgesamt eine Federenergie eingeprägt. Das Kraftspeicherelement ist ein Energiespeicher. Der Energiespeicher stellt einen Energiebetrag zur Verfügung, der für die Zurückverlagerung des Verriegelungselements für die Gewährleistung der Failsafe-Funktion erforderlich ist, insbesondere auch bei einer unerwarteten Unterbrechung der Stromzufuhr.

Wenn der Aktuator deaktiviert, also die Stromzufuhr beendet wird, wird das Verriegelungselement und insbesondere damit der Reibbelagsträger infolge der Federkraft und/oder der Eigenschwenkbewegung des Reibbelagsträgers in die Maximalposition verlagert. In diesem Fall wirkt die maximale Reibungskraft. Wenn der Aktuator mit einer erhöhten Spannung betätigt wird, wird das Verriegelungselement entgegen der Federkraft in eine Minimalposition oder Zwischenposition verlagert, und der Reibbelagsträger in der jeweiligen Position, insbesondere in der Minimalposition, verriegelt. In dieser Zwischenposition oder Minimalposition wirkt eine Reibungskraft, die gegenüber der maximalen Reibungskraft reduziert und insbesondere minimal ist. Dadurch ist eine gezielte Festlegung einer reduzierten, insbesondere minimalen, Reibungskraft möglich.

Die Verlagerung des Verriegelungselements in die Minimalposition erfolgt entgegen der Federkraft des mindestens einen Kraftspeicherelements. Dadurch ist eine Gegenkraft in dem Kraftspeicherelement eingeprägt, die der Verlagerung und Anordnung des Verriegelungselements in der Minimalposition entgegenwirkt.

Aufgrund der eingeprägten Gegenkraft des Kraftspeicherelements wird das Verriegelungselement aus der Minimalposition oder einer Zwischenposition heraus, insbesondere in die Maximalposition verlagert, insbesondere selbsttätig wenn der Aktuator deaktiviert ist, insbesondere durch Unterbrechung der Stromzufuhr. Insbesondere ist die von dem Kraftspeicherelement ausgeübte Gegenkraft derart dimensioniert, dass sie das Verriegelungselement und den Aktuator zuverlässig in die Maximalposition zurückverlagern. Insbesondere gewährleistet das mindestens eine Kraftspeicherelement eine zuverlässige Verlagerung des Verriegelungselements mit dem Aktuator in die Maximalposition bei unbeabsichtigtem Stromausfall. Die Ausfallsicherungs-Einheit gewährleistet einen sogenannten Fail-Safe-Betrieb des Reibungsdämpfers. Es ist ausgeschlossen, dass der Reibungsdämpfer bei Stromausfall unbeabsichtigt mit reduzierter und insbesondere mit minimaler Reibungskraft betätigt wird. Beschädigungen und/oder Zerstörungen an den zu dämpfenden Komponenten sind ausgeschlossen.

Wenn die Gewindespindel selbsthemmend ausgeführt ist gemäß Anspruch 8, ist die Ausfallsicherungs-Einheit insbesondere durch einen elektrischen Energiespeicher, insbesondere einen Kondensator, und/oder eine elektrische Schaltung ausgeführt. Die elektrische Schaltung kann ein entsprechendes Schaltsignal erzeugen, um den Aktuator, insbesondere auch bei Trennung der Stromversorgung, zurück in die Maximalposition zu verlagern. Entsprechend kann die für die Verlagerung des Verriegelungselements erforderliche Energie Bedarf von dem elektrischen Energiespeicher, insbesondere dem Kondensator zu Verfügung gestellt werden.

Im Fall der Selbsthaltung dient ein zusätzlicher elektrischer Energiespeicher zum Bereitstellen elektrischer Energie für das Auslösen des Schaltvorganges in die Maximalposition. Der elektrische Energiespeicher kann durch einen oder mehrere Kondensatoren ausgeführt sein. Der elektrische Energiespeicher stellt einen Stromimpuls für einen Schaltvorgang zur Verfügung, der zum Lösen der Selbsthaltung des Aktuators dient. Die weitere Verlagerung des Aktuators zurück in die Maximalposition kann selbsttätig erfolgen und insbesondere unterstützt durch mindestens ein Kraftspeicherelement, insbesondere einer mechanischen Feder und der darin eingeprägten Gegenkraft, erfolgen. Die Gegenkraft ist abhängig von der Ausführung des verwendeten Energiespeichers. Um bei der Selbsthaltung die "Fail-Safe-Funktion" zu gewährleisten, ist die Steuerungsvorrichtung vorgesehen, die bei Stromausfall den erforderlichen Stromimpuls für den Schaltvorgang zur Verfügung stellen kann.

Insbesondere weist der Reibungsdämpfer eine Steuerungsvorrichtung auf, die insbesondere zum Ansteuern des Aktuators, also insbesondere für die gesteuerte Stromzufuhr zu dem Aktuator, dient. Mit der Steuerungsvorrichtung ist die Failsafe-Funktion vorteilhaft umsetzbar und insbesondere zuverlässig gewährleistet. Die Steuerungsvorrichtung kann aber auch vorgesehen sein, wenn der Reibungsdämpfer keine Failsafe-Funktion aufweist.

Die Steuerungsvorrichtung weist insbesondere mindestens eine oder mehrere elektrische Komponenten, insbesondere elektromechanische Komponenten, insbesondere elektromechanische Schalter, insbesondere Relais, und/oder elektronische Komponenten, insbesondere elektronische Schaltkomponenten, insbesondere Transistoren, auf. Wenn Netzspannung anliegt, wird der zusätzliche elektrische Energiespeicher elektrisch geladen. Die Verbindung des elektrischen Energiespeichers zu dem Aktuator ist mittels der elektrischen Komponente getrennt. Bei einem, insbesondere unbeabsichtigten, Stromausfall gewährleisten die elektrischen Komponenten, dass der elektrische Energiespeicher von der Ladeeinrichtung, insbesondere der Netzspannung, getrennt und mit dem Aktuator verbunden wird. Dazu sind die elektrischen Schaltkomponenten insbesondere derart eingerichtet, dass sie im spannungsfreien Zustand den elektrischen Energiespeicher mit dem Aktuator verbinden.

Zusätzlich oder alternativ ist es auch möglich, die in dem elektrischen Energiespeicher gespeicherte elektrische Energie zusätzlich für die Steuerung der Steuerungsvorrichtung, insbesondere mittels Transistoren, zu verwenden.

Wenn die Gewindespindel eine Anteilige, insbesondere geringe, Selbsthemmung aufweist, kann die Zurückverlagerung des Verriegelungselements in die Maximalposition zumindest anteilig mittels des mindestens einen Kraftspeicherelements erfolgen. Zusätzlich kann eine Rückstellenergie mittels einer entsprechenden elektrischen Schaltung und/oder einem elektrischen Energiespeicher, insbesondere einen Kondensator, bereitgestellt werden, wie dies bei einer Gewindespindel mit Selbsthemmung bekannt ist. Der Vorteil einer Gewindespindel ohne Selbsthemmung besteht darin, dass eine reduzierte Haltespannung und damit ein reduzierter Energiebedarf erforderlich ist.

Ein Reibungsdämpfer mit einer Gewindespindel, die nicht selbsthemmend ausgeführt ist, ermöglicht einen besonders vorteilhaften Betrieb, insbesondere ein gestuftes Bestromen des Aktuators. Es wurde insbesondere erkannt, dass eine Maximalspannung, insbesondere 12 V, nur dann erforderlich ist, wenn ein Schaltvorgang durchgeführt werden muss, also das Verriegelungselement über die Spindelmutter axial verlagert werden soll. Derartige Schaltvorgänge sind bezogen auf die Lebensdauer des Reibungsdämpfers vergleichsweise selten, sodass die integrale Schaltdauer bezogen auf die Lebensdauer des Reibungsdämpfers vergleichsweise kurz ist. Entsprechend muss die Maximalspannung für eine vergleichsweise kurze Dauer abgegriffen werden. Der Aktuator kann kleinbauend und/oder kosteneffizient dimensioniert werden.

Um die Spindelmutter mit dem Verriegelungselement in einer festgelegten Axialposition zu halten ist eine vergleichsweise geringere Haltespannung, insbesondere 3 V, erforderlich. Die Haltespannung muss im Wesentlichen dauerhaft bereitgestellt werden. Dadurch, dass die Haltespannung gegenüber der Maximalspannung deutlich reduziert ist, ist der Gesamtenergieverbrauch für den Betrieb eines derartigen Reibungsdämpfers reduziert und dadurch vorteilhaft.

Ein Kippen des Reibbelagsträgers gemäß Anspruch 10 vereinfacht den Wechsel zwischen der Auszugsposition und der Einschubposition. Die Kippachse ist insbesondere gehäusefest angeordnet. Die Kippachse ist quer und insbesondere senkrecht zur Längsachse des Gehäuses orientiert. Insbesondere ist die Kippachse im Wesentlichen senkrecht zur Längsachse 3 orientiert, wobei Winkelabweichungen von +/- 15° bezüglich einer senkrechten Orientierung zur Längsachse für die Kippachse denkbar sind. Insbesondere ist im Gehäuse ein Kippzapfen angeordnet, an dem der Reibbelagsträger mit einer Kippöffnung kippbar angelenkt ist. Der Kippzapfen gibt die Kippachse vor. Die Kippbarkeit des Reibbelagsträgers ist vereinfacht. Der Reibbelagsträger wird auch als Kippkolben bezeichnet.

Insbesondere ist die Kippachse beabstandet von der Längsachse, insbesondere windschief zur Längsachse angeordnet. Aufgrund der beabstandeten Anordnung der Kippachse zur Längsachse ist ein Kippen des Reibbelagsträgers, also ein Umschalten zwischen der Auszugsposition und der Einschubposition vorteilhaft möglich. Insbesondere wird unmittelbar ein Drehmoment bezüglich der Kippachse auf den Reibbelagsträger in Abhängigkeit der Betätigung des Stößels in Einschubrichtung bzw. in Auszugsrichtung bewirkt.

Eine Ausführung des Reibbelagsträgers gemäß Anspruch 11 gewährleistet eine unkomplizierte und zuverlässige Anordnung des mindestens einen Reibbelags in einer dafür vorgesehenen Reibbelagsaufnahme. Insbesondere ist für jeden Reibbelag mindestens eine und insbesondere genau eine Reibbelagsaufnahme vorgesehen. Insbesondere sind mehrere, insbesondere zwei, Reibbelagsaufnahmen in dem Reibbelagsträger integriert, wobei in jeder Reibbelagsaufnahme ein Reibbelag angeordnet ist.

Insbesondere sind zwei Reibbeläge vorhanden und ermöglichen eine verbesserte, insbesondere effizientere, Reibkrafterzeugung. Es ist denkbar, die Reibbeläge identisch auszuführen. Der Herstellungsaufwand für den Reibungsdämpfer ist reduziert. Die Reibbeläge weisen insbesondere eine Kontur auf, die der Außenkontur des Stößels entspricht. Die Reibbeläge können flächig, insbesondere vollflächig, an dem Stößel anliegen. Die Reibkrafterzeugung ist effizient. Die Reibbeläge weisen insbesondere eine Halbschalenkontur auf. Die Halbschalenkontur ist ein offener Rohrquerschnitt. Die Innenkontur der Halbschale ist insbesondere eine Innenzylindermantelfläche. Es ist auch denkbar, dass der Stößel eine senkrecht zur Längsachse orientierte Querschnittsfläche aufweist, die unrund ausgeführt ist, insbesondere oval oder polygonartig. Entsprechend ist die Innenkontur des Reibbelags in diesem Fall ausgeführt. Es ist auch denkbar, dass der Reibbelag durch einen oder mehrere Reibstreifen ausgeführt ist. Ein Reibstreifen ist im Wesentlichen flächig ausgeführt. Der Reibstreifen ist insbesondere flexibel, so dass der Reibstreifen insbesondere durch Einlegen in die Reibbelagsaufnahme die dem Stößel korrespondierende Kontur annimmt. Insbesondere weist die Reibbelagsaufnahme eine dem Stößel korrespondierende Kontur auf.

Eine Ausführung des Reibbelagsträgers gemäß Anspruch 12 ermöglicht eine effektive Reibungsdämpfung. Der mindestens eine Reibbelag kann in radialer Richtung bezogen auf die Längsachse zwischen dem innen angeordneten Stößel und dem außen angeordneten Reibbelagsträger angeordnet sein. Insbesondere wird der mindestens eine Reibbelag von dem Reibbelagsträger in radialer Richtung an den Stößel gedrückt. Der Reibbelagsträger mit Durchgangsöffnung ermöglicht eine kompakte Bauweise der Reibungs-Einheit.

Die Durchgangsöffnung weist insbesondere eine senkrecht zur Längsachse zumindest abschnittsweise unsymmetrische Kontur auf und ermöglicht ein vorteilhaftes Umschalten zwischen der Auszugsposition und der Einschubposition. Insbesondere ist ein kollisionsfreies Kippen des Reibbelagsträgers gegenüber dem Stößel zwischen der Auszugsposition und der Einschubposition möglich. Eine Durchgangsöffnung des Reibbelagsträgers stellt den für das Umschalten zwischen der Auszugsposition und der Einschubposition erforderlichen Freiraum zur Verfügung. Eine unsymmetrische Kontur der Durchgangsöffnung ist beispielsweise dadurch gegeben, dass die Kontur eine Trennlinie aufweist. Die Durchgangsöffnung weist insbesondere eine unsymmetrische Innen-Kontur auf. Die unsymmetrische Innen-Kontur kann abschnittsweise symmetrisch ausgeführt sein und beispielsweise als Kreissegment ausgeführt sein. Symmetrisch bedeutet rotationssymmetrisch zur Längsachse. Die unsymmetrische Innen-Kontur weist jedenfalls mindestens einen unsymmetrischen Abschnitt auf, der insbesondere unrund ausgeführt ist. Es können auch mehrere, insbesondere getrennt voneinander ausgeführte unsymmetrische Abschnitte vorgesehen sein. Wesentlich ist, dass die unsymmetrische Innen-Kontur zumindest abschnittsweise nicht rotationssymmetrisch bezüglich der Längsachse ausgeführt ist. Unsymmetrisch bedeutet insbesondere nicht rotationssymmetrisch bezüglich der senkrecht zur Kontur orientierten Längsachse. Die Trennlinie ist insbesondere eine Gerade, die insbesondere die Längsachse schneidet. Die Trennlinie symbolisiert eine Trennebene, die sich entlang der Längsachse erstreckt. Die Trennlinie kann auch gekrümmt oder geknickt ausgeführt sein. Die Trennlinie unterteilt die Kontur der Durchgangsöffnung in einen symmetrischen, insbesondere runden Konturabschnitt und einen unsymmetrischen, insbesondere unrunden Konturabschnitt. Durch die Trennlinie sind der symmetrische Konturabschnitt und der unsymmetrische Konturabschnitt voneinander getrennt.

Zusätzlich oder alternativ kann die Durchgangsöffnung mit einem ersten Durchgangsöffnungsabschnitt und einem zweiten Durchgangsöffnungsabschnitt ausgeführt sein, die jeweils eine Abschnitts-Längsachse aufweisen, die mit einem Neigungswinkel geneigt zueinander angeordnet sind, wodurch gewährleistet wird, dass der Reibbelagsträger in Abhängigkeit der Kippposition entweder mit einem ersten oder mit einem zweiten Durchgangsöffnungsabschnitt parallel zur Längsachse des Gehäuses angeordnet ist. Die Durchgangsöffnungsabschnitte weisen jeweils eine Abschnitts-Längsachse auf, die zueinander geneigt angeordnet sind. Die Abschnitts-Längsachsen sind insbesondere derart orientiert, dass in der Auszugsposition des Reibbelagsträgers eine erste Abschnitts-Längsachse parallel zur Längsachse des Gehäuses und eine zweite Abschnitts-Längsachse geneigt zu der Längsachse des Gehäuses angeordnet ist. Entsprechend ist in der Einschubposition die zweite Abschnitts-Längsachse parallel zur Längsachse des Gehäuses und die erste Abschnitts-Längsachse geneigt zur Längsachse des Gehäuses angeordnet.

Eine Reibbelagsaufnahme gemäß Anspruch 13 ermöglicht eine zuverlässige und sichere Aufnahme des Reibbelags am Reibbelagsträger. Der Reibbelag ist in der Reibbelagsaufnahme insbesondere in radialer Richtung und/oder in axialer Richtung bezogen auf die Längsachse des Gehäuses und/oder die Abschnitts-Längsachse gehalten. Die Reibbelagsaufnahme weist insbesondere eine Tiefe auf, die geringfügig kleiner ist als die Dicke des Reibbelags, so dass der Reibbelag dauerhaft in radialer Richtung an den Stößel angepresst wird. Die Reibbelagsaufnahme weist eine entlang der Längsachse orientierte Länge auf, die etwa der Länge des Reibbelags entspricht. Der Reibbelag ist dann zuverlässig und axial nicht vorgespannt in der Reibbelagsaufnahme gehalten. Es ist auch denkbar, den Reibbelag in axialer Richtung vorzuspannen, indem die Reibbelagsaufnahme eine Länge aufweist, die kleiner ist als die Länge des Reibbelags.

Bei einer Ausführung der Durchgangsöffnung mit einem senkrecht zur Längsachse orientierten Querschnitt, der entlang der Längsachse veränderlich ist, ist gewährleistet, dass in Abhängigkeit der Kippposition des Reibbelagsträgers ein zuverlässiges Anliegen des Reibbelags zumindest abschnittsweise am Stößel gewährleistet ist.

Befestigungselemente an dem Reibungsdämpfer gemäß Anspruch 14 ermöglichen eine unmittelbare Befestigung des Reibungsdämpfers an zueinander beweglichen Teilen, insbesondere eines Waschbottichs und einem Gehäuse einer Waschmaschine.

Eine Sensoreinheit mit einem korrespondierenden Weggeber gemäß Anspruch 15 ermöglicht eine verbesserte Signalerfassung für den Betrieb des Reibungsdämpfers. Der Weggeber ist insbesondere ein magnetischer Wegsensor. Eine mit einem derartigen Reibungsdämpfer ausgerüstete Waschmaschine ermöglicht eine verbesserte Funktionalität, insbesondere die Ermittlung der Beladungsmenge und/oder die Kontrolle und Steuerung eines Schleudervorgangs. Insbesondere sind die Sensoreinheit und/oder der Weggeber in dem Reibungsdämpfer integriert angeordnet. Der Reibungsdämpfer ist kompakt und robust ausgeführt.

Sowohl die in den Patentansprüchen angegebenen Merkmale als auch die in dem nachfolgenden Ausführungsbeispiel des erfindungsgemäßen Reibungsdämpfers angegebenen Merkmale sind jeweils für sich alleine oder in Kombination mit einander geeignet, den erfindungsgemäßen Gegenstand weiterzubilden. Die jeweiligen Merkmalskombinationen stellen hinsichtlich der Weiterbildung des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: Eine Seitenansicht eines Erfindungsgemäßen Reibungsdämpfers,
- Fig. 2: eine Schnittdarstellung gemäß Schnittlinie II-II in Fig. 1 mit in Minimalposition verriegeltem Reibbelagsträger,
- Fig. 3: eine Fig. 2 entsprechende Darstellung mit verriegeltem Reibbelagsträger in einer Maximalposition mit einer maximalen richtungsunabhängigen Reibungskraft,
- Fig. 4: eine Fig. 1 entsprechende um 90 ° bezüglich der Längsachse gedrehte Seitenansicht des Reibungsdämpfers
- Fig. 5: eine Schnittdarstellung gemäß Schnittlinie V-V in Fig. 4 mit in Minimalposition verriegeltem Reibbelagsträger,
- Fig. 6: eine Fig. 5 entsprechende Darstellung mit in Maximalposition verriegeltem Reibbelagsträger gemäß Fig. 3,
- Fig. 7: eine perspektivische Explosionsdarstellung des Reibungsdämpfers.

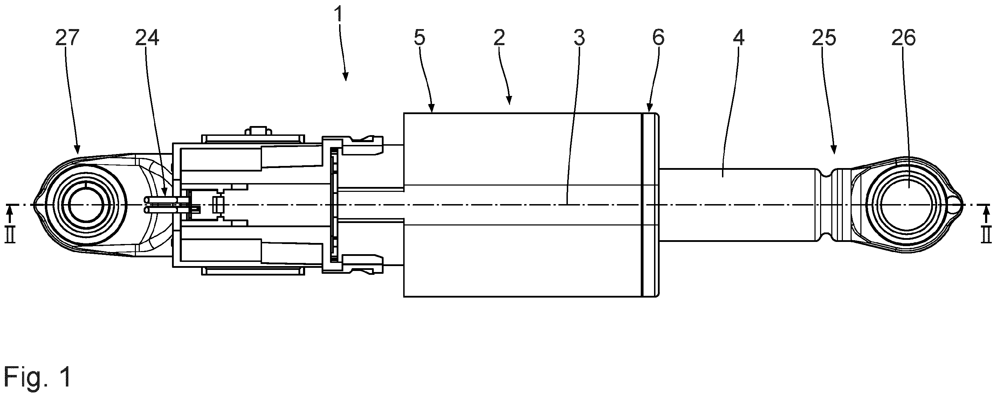

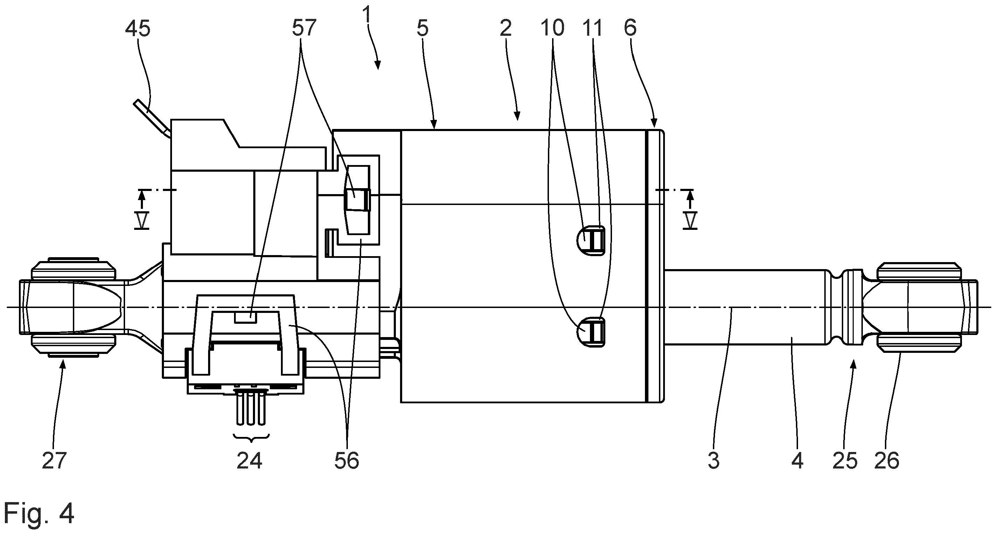

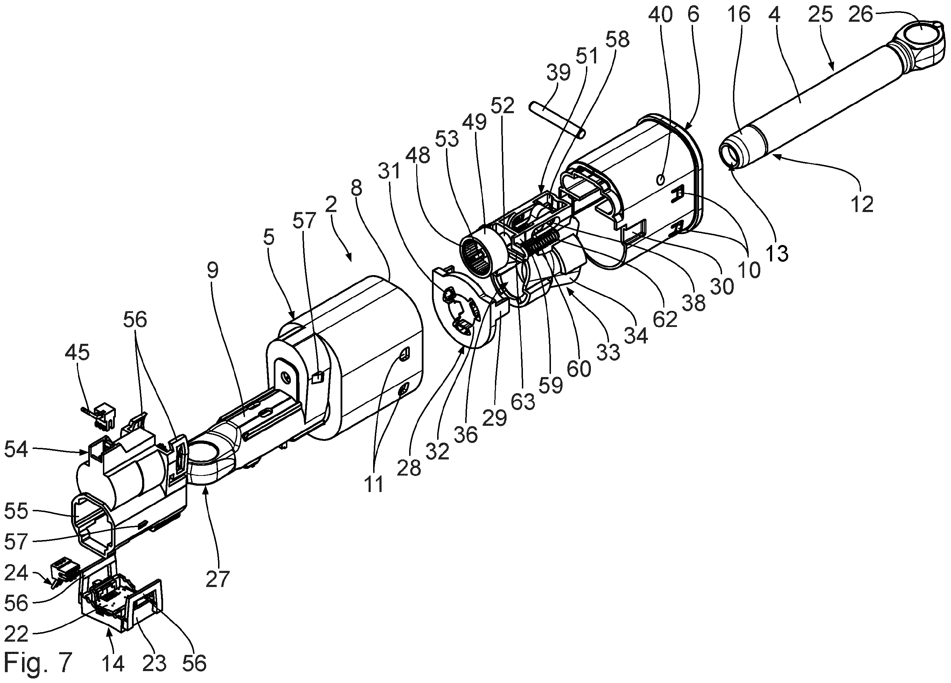

Ein in Fig. 1 bis 7 als Ganzes mit 1 bezeichneter Reibungsdämpfer weist ein Gehäuse 2 mit einer Längsachse 3 und einen entlang der Längsachse 3 verlagerbaren Stößel 4 auf.

Das Gehäuse 2 ist mehrteilig ausgeführt und umfasst insbesondere einen Rohrgehäuseabschnitt 5 und einen damit verbundenen Dämpfungsgehäuseabschnitt 6. Das Gehäuse 2 weist eine Gehäuseöffnung auf, durch die hindurch der Stößel 4 in das Gehäuse 2, insbesondere durch den Dämpfungsgehäuseabschnitt 6 hindurch in den Rohrgehäuseabschnitt 5 geführt ist. An einem dem Dämpfungsgehäuseabschnitt 6 abgewandten Ende weist der Rohrgehäuseabschnitt 5 ein erstes Befestigungselement 27 in Form eines Befestigungsauges auf. Der Dämpfungsgehäuseabschnitt 6 ist entlang der Längsachse 3 in den Rohrgehäuseabschnitt 5 eingeschoben, axial mittels eines Radialbundes 7 an einer Stirnseitenfläche 8 des Rohrgehäuseabschnitts 5 abgestützt und in dem Rohrgehäuseabschnitt 5 axial fixiert, insbesondere mittels einer nicht näher dargestellten Rastverbindung.

Der Rohrgehäuseabschnitt 5 weist zumindest abschnittsweise entlang der Längsachse 3 einen Rohrabschnitt 9 auf, dessen Innenkontur mit der Außenkontur des Stößels korrespondiert. Die Innenkontur des Rohrabschnitts 9 ist größer als die Außenkontur des Stößels 4, sodass der Stößel 4 berührungsfrei entlang der Längsachse 3 im Rohrabschnitt 9 axial verlagerbar ist. Eine Berührung zwischen der Außenkontur des Stößels 4 und der Innenkontur des Rohrabschnitts 9 ist vermieden.

Der Stößel 4 ist rohrförmig und insbesondere im Wesentlichen zylindrisch ausgeführt. Gemäß dem gezeigten Ausführungsbeispiel ist der Rohrabschnitt 9 hohlzylindrisch ausgeführt. Entsprechend der Außenkontur des Stößels 4 kann die Innenkontur des Rohrabschnitts 9 auch unrund, insbesondere oval oder polygonförmig, insbesondere viereckig, sechseckig oder achteckig, ausgeführt sein. Wesentlich ist, dass die Außenkontur des Stößels 4 entlang der Längsachse 3 konstant ist. Der Rohrabschnitt 9 des Rohrgehäuseabschnitts 5 ist konzentrisch zur Längsachse 3 orientiert. Der Rohrgehäuseabschnitt 5 und der Dämpfungsgehäuseabschnitt 6 sind jeweils insbesondere einteilig ausgeführt. Die Gehäuseabschnitte 5, 6 sind insbesondere aus einem Kunststoffmaterial, insbesondere aus einem thermoplastischen Kunststoffmaterial, hergestellt.

An einem ersten Ende 12, mit dem der Stößel 4 innerhalb des Gehäuses 2 angeordnet ist, ist ein Weggeber 13 befestigt. Mit dem Weggeber 13 korrespondiert eine Sensoreinheit 14. Der Weggeber 13 umfasst einen zylindrischen Permanentmagnet 15, der mittels einer aus Kunststoffmaterial hergestellten Magnet-Halterung 16 dem Stößel 4 gehalten ist. Die Magnethalterung 16 weist eine Magnetaufnahme auf, in die der Permanentmagnet 15 stirnseitig eingeschoben werden kann. Die Magnetaufnahme ist hülsenförmig ausgeführt. In der Magnetaufnahme ist der Permanentmagnet 15 axial zuverlässig gehalten.

An einem der Magnetaufnahme gegenüberliegenden Ende weist die Magnet-Halterung 16 einen Befestigungsabschnitt 20 auf, mit dem die Magnet-Halterung 16 axial auf den Stößel 4 aufgeschoben und darin befestigt werden kann.

Besonders vorteilhaft an dem Weggeber 13 ist, dass er optional und insbesondere nachträglich, mit dem Stößel 4 verbindbar ist. Es ist insbesondere unproblematisch möglich, einen Stößel 4 ohne Weggeber mit dem Weggeber 13 nachzurüsten.

Die Sensoreinheit 14 umfasst einen magnetischen Wegsensor 22, der zur Positionserfassung des Permanentmagneten 15 und damit des Stößels 4 relativ zum Gehäuse 2 geeignet ist. Der magnetische Wegsensor 22 ist gehäusefest mittels einer Sensorhalterung 23 am Gehäuse 2 und insbesondere am Rohrgehäuseabschnitt 5 und insbesondere am Rohrabschnitt 9, befestigt. Der magnetische Wegsensor 22 erzeugt ein Steuerungssignal, dass über eine erste Signalleitung 24 an eine nicht näher dargestellte Steuerungseinheit übermittelt werden kann. Es ist auch denkbar, dass die Signalübertragung kabellos erfolgt.

Zur Verbesserung des Sensor-Messbereichs in Verbindung mit dem mechanischen Hub des Reibungsdämpfers 1 ist es vorteilhaft, wenn der Stößel 4 aus einem nicht-ferromagnetischen Material hergestellt ist, insbesondere aus Kunststoff.

Insbesondere können der Stößel 4 und die Magnet-Halterung 16 einstückig, insbesondere aus Kunststoff, hergestellt sein. Insbesondere kann auch ein zweites Befestigungselement 26 einstückig mit dem Stößel 4 hergestellt sein.

Das mit der Sensoreinheit 14 gemessene Wegsignal kann insbesondere zur Steuerung eines Waschprogramms einer Waschmaschine zur Ermittlung der Beladungsmenge und/oder zur Kontrolle und Steuerung eines Schleudervorgangs in einer Waschmaschine verwendet werden.

An einem dem ersten Ende 12 gegenüberliegenden zweiten Ende 25 weist der Stößel 4 ein zweites Befestigungselement 26 auf, das als Befestigungsauge ausgeführt ist. Das zweite Befestigungselement 26 ist insbesondere mit einem Verbindungsabschnitt stirnseitig in das Gleitrohr des Stößels 4 eingesteckt und darin befestigt, insbesondere durch Formpressen verbunden. Es sind auch Fügeverfahren wie Kleben oder Schweißen möglich. Das zweite Ende 25 des Stößels 4 ist mit dem zweiten Befestigungselement 26 außerhalb des Gehäuses 2 angeordnet.

Der Reibungsdämpfer 1 kann mit den Befestigungselementen 26, 27 an zueinander beweglichen, zu dämpfenden Teilen angelenkt sein. Beispielsweise sind die Befestigungselemente 26, 27 zur Dämpfung von Oszillationen einer Waschmaschine mit dem Gehäuse der Waschmaschine einerseits und mit dem Waschbottich der Waschmaschine andererseits verbunden.

An einer dem Rohrgehäuseabschnitt 5 zugewandten Stirnseite ist an dem Dämpfungsgehäuseabschnitt 6 eine Stützscheibe 28 angeordnet. Die Stützscheibe 28 weist zwei axiale Führungsfinger 29 auf, die in entsprechende Ausnehmungen 30 an einer Außenseite des Dämpfungsgehäuseabschnitts 6 eingreifen. Die Stützscheibe 28 ist eindeutig und zuverlässig an dem Dämpfungsgehäuseabschnitt 6 positioniert und darangehalten.

Die Stützscheibe 28 weist eine Durchgangsöffnung auf. An der Durchgangsöffnung sind mehrere, insbesondere drei, Dämpfungs-Elemente 31 und Führungsstege 32 angeordnet. Die Stützscheibe 28 bildet eine Führungs-/Dämpfungs-Einheit zur Dämpfung und Zentrierung einer Auslenkung des Stößels 4 quer zu Längsachse 3. Eine derartige Führungs-/Dämpfungs-Einheit ist aus EP 1 584 730 A2 bekannt. Bezüglich Konstruktion und Funktion, insbesondere der Dämpfungs-Elemente 31 und der Führungsstege 32, wird ausdrücklich darauf verwiesen.

Als besonders vorteilhaft ist bei der Stützscheibe 28 erkannt worden, dass genau drei Dämpfungselemente 31 und genau drei Führungsstege 32 vorhanden sind, wobei jeweils zwischen zwei in Umfangsrichtung benachbart angeordneten Dämpfungselementen 31 genau ein Führungssteg 32 angeordnet ist. Durch diese wechselweise Anordnung sind die Dämpfungselemente 31 und die Führungsstege 32 jeweils mit einem Öffnungswinkel von 120 ° bezüglich der Längsachse 3 zueinander angeordnet. Insbesondere ist die Führungs-/Dämpfungs-Funktion bezüglich einer radialen Ablenkung richtungsunabhängig. Das bedeutet insbesondere, dass die radiale Führungs-/Dämpfungsfunktion der Stützscheibe 28 unabhängig von der Einbaulage des Dämpfers 1 in der Waschmaschine ist. Der Reibungsdämpfer 1 ist flexibel einsetzbar. Die Montage des Reibungsdämpfers ist vereinfacht und unkompliziert.

Der Reibungsdämpfer 1 weist eine Reibungs-Einheit 33 auf. Die Reibungs-einheit 33 umfasst einen Reibbelagsträger 34, an dem zwei, insbesondere identisch ausgeführte, jeweils halbschalenförmig ausgeführte Reibbeläge 35 gehalten sind. Die Reibbeläge 35 sind jeweils in einer Reibbelagsaufnahme 36 angeordnet, die als, insbesondere radiale, Vertiefung in einer Innenfläche einer Durchgangsöffnung 37 des Reibbelagsträgers 34 ausgeführt ist.

Im montierten Zustand des Reibungsdämpfers 1 ist der Stößel 4 durch die Durchgangsöffnung 37 hindurchgeführt. Die Durchgangsöffnung 37 ist in einer Ebene senkrecht zur Längsachse 3 zumindest abschnittsweise unsymmetrisch ausgeführt. Die Durchgangsöffnung 37 weist einen ersten Durchgangsöffnungsabschnitt mit einer ersten Abschnitts-Längsachse und einen zweiten Durchgangsöffnungsabschnitt mit einer zweiten Abschnitts-Längsachse auf. Die Abschnitts-Längsachsen sind mit einem Neigungswinkel n geneigt zueinander angeordnet. Der Neigungswinkel beträgt insbesondere zwischen 5 ° und 60 ° und insbesondere zwischen 15 ° und 45 °. Die Reibbelagsaufnahmen 36 sind jeweils als nutförmige Vertiefungen im Bereich der Durchgangsöffnung 37 angeordnet. Die Durchgangsöffnung 37 ist von einem im Wesentlichen Rohrförmig ausgeführten Durchgangsabschnitt des Reibbelagsträgers 34 vorgegeben. Außerhalb des Durchgangsabschnitts, insbesondere beabstandet zu der Durchgangsöffnung 37 weist der Reibbelagsträger 34 einen Schwenkabschnitt auf, in dem eine Schwenköffnung 38 angeordnet ist. Die Schwenköffnung 38 dient zur schwenkbaren Anordnung des Reibbelagsträgers 34 in dem Gehäuse 2. Dazu ist der Reibbelagsträger 34 mit einem bolzenartigen Verbindungselement 39 in dem Gehäuse 2 schwenkbar angeordnet. Das Verbindungselement 39 ist ein Verbindungsbolzen. Das Verbindungselement 39 kann durch eine Seitenöffnung 40 im Dämpfungsgehäuseabschnitt 6 zur Montage des Reibbelagsträgers 34 quer eingeschoben werden. Eine unbeabsichtigte Verlagerung des Verbindungsbolzens 39 aus der Seitenöffnung 40 ist zuverlässig ausgeschlossen, wenn der Dämpfungsgehäuseabschnitt 6 in den Rohrgehäuse Abschnitt 5 eingeschoben ist. Das Verbindungselement 39 ist dann durch den Rohrgehäuseabschnitt 5 in seiner Lage blockiert.

Das Verbindungselement 39 gibt eine Kippachse 41 vor, um die der Reibbelagsträger 34 an dem Verbindungselement 39 und damit gegenüber dem Gehäuse 2 kippbar angeordnet ist. Die Kippachse 41 ist senkrecht zur Längsachse 3 des Gehäuses 2 orientiert. Die Kippachse 41 ist beabstandet zu der Längsachse 3 orientiert. Die Kippachse 29 und die Längsachse 3 schneiden sich nicht. Die Lagebeziehung der Kippachse 41 und der Längsachse 3 im Raum wird als windschief bezeichnet.

Der Reibbelagsträger 34 weist an einer der Durchgangsöffnung 37 abgewandten Außenseite mindestens eine und insbesondere mehrere Verriegelungsflächen 42 auf. Die Verriegelungsflächen 42 sind insbesondere stufenförmig oder treppenförmig ausgeführt. Insbesondere sind die Verriegelungsflächen 42 benachbart zueinander an der Außenseite des Reibbelagsträgers 34 angeordnet.

Der Reibbelagsträger 34 ist vollständig innerhalb des Gehäuses 2 und insbesondere vollständig innerhalb des Dämpfungsgehäuseabschnitts 6 angeordnet. Insbesondere ist der Reibbelagsträger 34 derart in dem Gehäuse 2 angeordnet, dass die Durchgangsöffnung 37 fluchtend zu der Längsachse 3 orientiert ist.

Der Reibungsdämpfer 1 weist eine Schalt-Einheit 43 auf. Die Schalt-Einheit 43 umfasst einen schaltbaren Aktuator 44, der als Elektromotor und insbesondere als Gleichstrom-Motor ausgeführt ist. Der Aktuator 44 ist mittels einer Aktuatorhalterung 54 am Gehäuse 2 gehalten. Die Aktuatorhalterung 54 weist insbesondere einen Schiebehülsenabschnitt 55 auf, die auf den Rohrabschnitt 9 des Gehäuses 2 aufschiebbar ist. Die Aktuatorhalterung 54 kann mit zwei seitlich angeordneten Rastlaschen 56 an korrespondierenden Erhebungen 57 an einer Außenseite des Gehäuses 2, insbesondere des Rohrgehäuseabschnitts 5 verrasten. An einer Außenseite der Aktuatorhalterung 54 sind entsprechende Erhebungen 57 angeordnet, auf die entsprechende Rastlaschen 56 der Sensorhalterung 23 aufgerastet und verriegelt werden können.

Zur Betätigung des Aktuators 44 ist dieser mittels eines Steckers an ein Anschlusskabel 45 angeschlossen. An einer Antriebswelle 46 des Elektromotors 44 ist ein Antriebsritzel 47 befestigt. Das Antriebsritzel 47 wirkt mit einer Innenverzahnung 48 in einem Becherelement 49 zusammen. Das Antriebsritzel 47 und die Innenverzahnung 48 bilden ein Getriebe, insbesondere ein Untersetzungsgetriebe. Das Becherelement 49 weist einen Becherboden auf, der dem Antriebsritzel 47 abgewandt angeordnet ist. An dem Becherboden ist eine Gewindespindel angeordnet und insbesondere an dem Becherboden befestigt. Insbesondere ist die Gewindespindel 50 einteilig an dem Becherelement 49 angeformt. Die Gewindespindel 50 und das Getriebe bilden eine Kraftübertragungseinheit zur Übertragung es Antriebsdrehmoments von dem Aktuator 44 auf ein Verriegelungselement 51. Das Verriegelungselement 51 ist Teil der Schalt-Einheit 43. Mittels der Kraftübertragungseinheit ist das Verriegelungselement 51 mit dem Aktuator 44 mechanisch gekoppelt. Das Verriegelungselement 51 weist eine mit der Gewindespindel 50 zusammenwirkende Spindelmutter 52 auf, die an dem Verriegelungselement 51 befestigt und insbesondere integral daran angeformt ist.

Die von dem Aktuator 44 bereitgestellte Antriebsdrehbewegung wird mittels der Gewindespindel 50 und der Spindelmutter 52 in eine Linearbewegung des Verriegelungselements 51 umgesetzt. Die Verlagerungsrichtung ist parallel zur Längsachse 3 orientiert.

Das Becherelement 49 ist mittels eines Führungsstifts 53 axial an einer Stirnwand des Gehäuses 2, insbesondere des Rohrgehäuseabschnitts 5 abgestützt. Mittels des Führungsstifts 53 ist das Becherelement 49 drehbar am Gehäuse 2 gelagert.

Das Verriegelungselement 51 ist im Wesentlichen rahmenartig und insbesondere in Form eines Rechteckrahmens ausgeführt. Die Hauptrichtungen des Rechtecks erstrecken sich jeweils in einer Richtung parallel zur Längsachse 3 und parallel zur Kippachse 41.

Das Verriegelungselement 51 ist als Schieber ausgeführt. Der Rechteckrahmen umschließt eine Öffnung 58 in einer Richtung senkrecht zu der Rechteckebene des Rahmes. Durch die Öffnung 58 hindurch ist der Reibbelagsträger 34 in der montierten Anordnung des Reibungsdämpfers 1 geführt. Insbesondere ist der Schwenkabschnitt des Reibbelagsträgers 34 durch die Öffnung 58 geführt.

Die sich parallel zur Längsachse 3 erstreckenden Seitenwände 59 des Rechteckrahmens weisen jeweils ein Führungs-Langloch 60 auf, durch das der Verbindungsbolzen 39 in der montierten Anordnung des Reibungsdämpfers 1 geführt ist. Durch das Führungs-Langloch 60 ist eine Axialverlagerung des Verriegelungselements 51 in einer Richtung parallel zur Längsachse 3 möglich.

An seinem rückwärtigen Ende weist das Verriegelungselement 51 eine Anlagefläche 61 auf, die dem Reibbelagsträger 34 und insbesondere dessen Verriegelungsflächen 42 zugewandt angeordnet ist. Insbesondere dient die Anlagefläche 61 zum Anliegen an einer der Verriegelungsflächen 42.

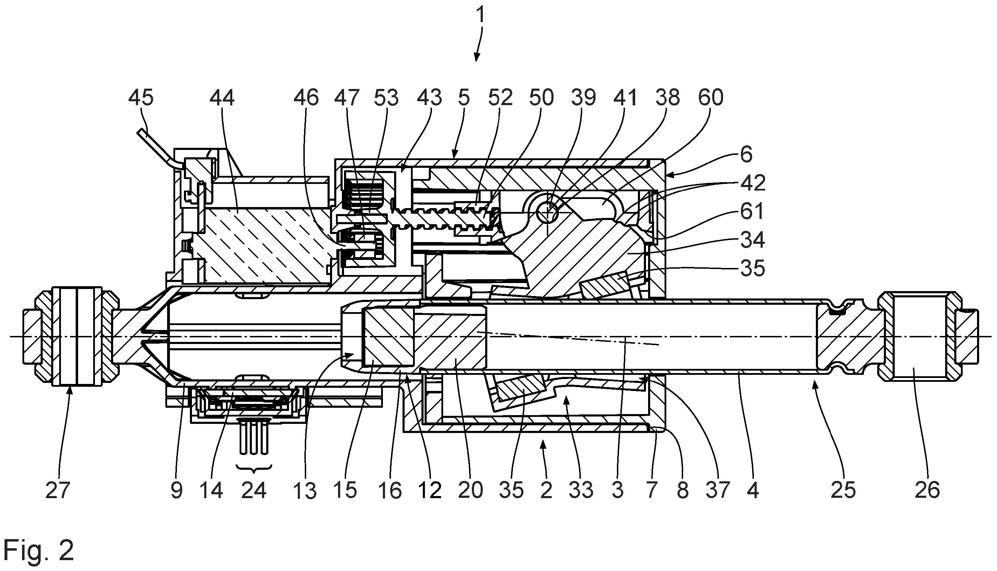

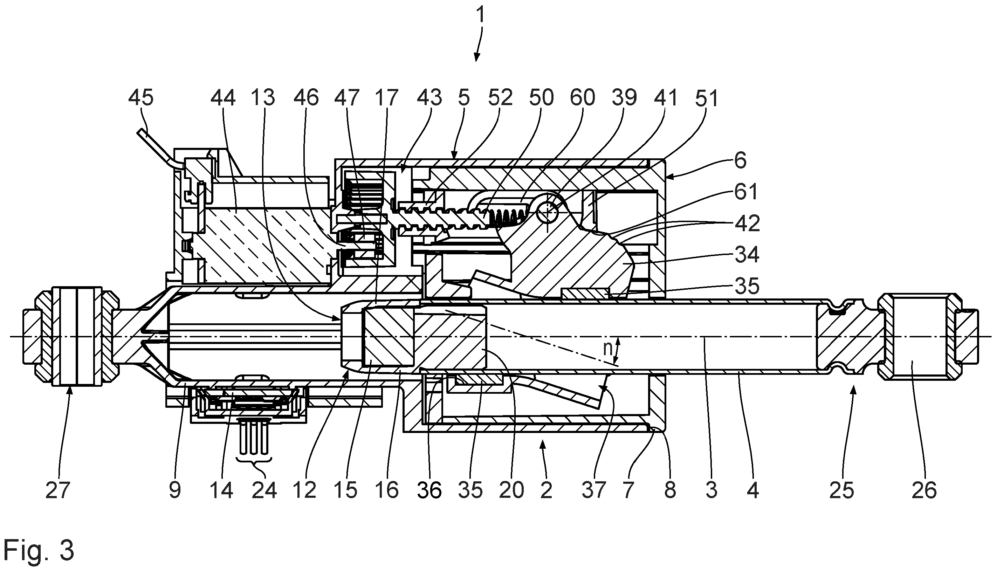

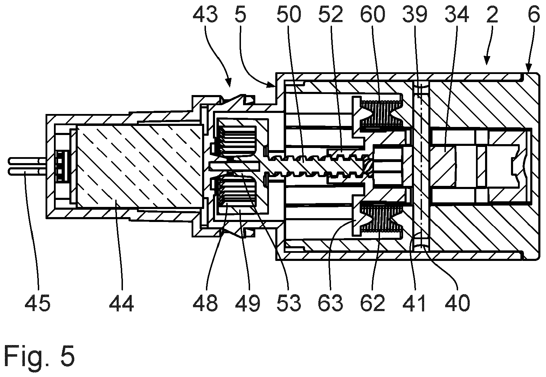

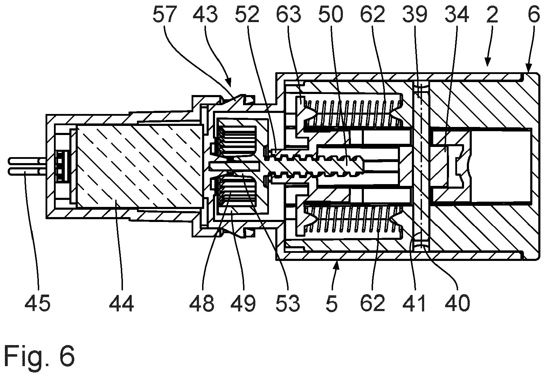

Der Reibungsdämpfer 1 ist mit einer Ausfallsicherungs-Einheit ausgeführt, die zwei Kraftspeicherelemente 62 umfasst, die gemäß dem gezeigten Ausführungsbeispiel jeweils als Schraubendruckfeder ausgeführt sind. Die Kraftspeicherelemente 62 sind zwischen dem Verriegelungselement 51 und dem Dämpfungsgehäuseabschnitt 6abgestützt. In einer in Fig. 3. und Fig. 6 gezeigten Anordnung sind die Kraftspeicherelemente 62 maximal entspannt und insbesondere mit minimaler Vorspannung angeordnet. Durch eine Verlagerung des Verriegelungselements 41 in die in Fig. 2 und 5 gezeigte Anordnung werden die Kraftspeicherelemente 62 komprimiert. Dadurch wird eine höhere Federkraft in den Kraftspeicherelementen 62 eingeprägt.

Insbesondere sind die beiden Kraftspeicherelemente 62 seitlich neben dem Rechteckrahmen des Verriegelungselements 51 angeordnet. Dazu weist das Verriegelungselement 51 seitliche Druckplatten 63 auf, die zum Aufbringen der Druckkraft auf die Kraftspeicherelemente 62 vorgesehen sind. Bezüglich der grundlegenden Funktion des Reibungsdämpfers 1 hinsichtlich der Richtungsabhängigkeit und hinsichtlich der Verriegelbarkeit des Reibbelagsträgers 34 im Gehäuse 2 wird ausdrücklich auf die EP 3 869 062 A1 verwiesen.

In Ergänzung dazu ist für das hier gezeigte Ausführungsbeispiel ergänzend anzumerken, dass eine besonders robuste und kompakte Konstruktion ermöglicht ist, die eine effiziente Kraftübertragung von dem Aktuator 44 mittels des Getriebes und der Gewindespindel 50 auf das Verriegelungselement 51 ermöglicht. Eine Verstellung des Verriegelungselements 51 und damit eine zielgerichtete Verriegelung des kippbaren Reibbelagsträgers ist unkompliziert und zuverlässig möglich, in dem das Verriegelungselement 51 mit der Anlagefläche 61 entweder beabstandet zu dem Reibbelagsträger 34 anordenbar ist, um eine freie Schwenkbarkeit des Reibbelagsträgers 34 im Gehäuse 2 zu ermöglichen. Alternativ kann das Verriegelungselement 51 derart verlagert werden, dass die Anlagefläche 61 an einer der Verriegelungsflächen 42 anliegt und eine verriegelte Anordnung in einer gewünschten Schwenkposition des Reibbelagsträgers 34 ermöglicht. In einer verriegelten Position, die beispielsweise in Fig. 3 gezeigt ist, ist die Schwenkbarkeit des Reibbelagsträgers 34 verhindert. In dieser Anordnung weist der Reibungsdämpfer 1 konstante, also richtungsunabhängige, Dämpfungseigenschaften auf.

Gemäß dem gezeigten Ausführungsbeispiel ist die Gewindespindel 50 nicht selbsthemmend ausgeführt. Sobald die Stromversorgung des Aktuators 44 unterbrochen ist, wird das Verriegelungselement 51 in die in Fig. 3 gezeigte Anordnung verlagert. Grund dafür ist die in den Kraftspeicherelementen 62 eingeprägte Federkraft, die das Verriegelungselement 51, insbesondere die Druckplatten 63 weg von der Seitenöffnung 40 mit dem Verbindungselement 39 drückt. In der in Fig. 3 und 6 gezeigten Anordnung weist der Reibungsdämpfer 1 eine maximale Reibungswirkung auf, sodass selbst bei unbeabsichtigter Unterbrechung der Stromversorgung der Reibungsdämpfer 1 in einen Sicherungszustand überführt ist, insbesondere selbsttätig.

Zusammenfassend kann der Aufbau des Reibungsdämpfers 1 anhand seiner Montage funktional derart zusammengefasst werden, dass zunächst der Dämpfungsgehäuseabschnitt 6 mit der den Reibbelagsträger 34 umfassenden Reibungs-Einheit 33, dem Verriegelungselement 51, den Kraftspeicherelementen 62, der Stützscheibe 28, die als Einlegering bezeichnet wird und dem bolzenartigen Verbindungselement 39 vormontiert wird.

Eine Rohrbaugruppe ist durch den Stößel 4, der den Permanentmagneten 15 haltenden Magnet-Halterung 16 und dem zweiten Befestigungselement 26 gebildet. Aus der ersten Baugruppe und der Rohrbaugruppe wird eine Vorbaugruppe gebildet, die in dem Rohrgehäuseabschnitt 5 montiert und dadurch ein sogenannter Basisdämpfer gebildet wird. Der Rohrgehäuseabschnitt 5 ist insbesondere einteilig ausgeführt.

Eine Motorbaugruppe umfasst den Schiebehülsenabschnitt 55, den Aktuator 44 sowie die Sensorhalterung 23 mit dem darin gehaltenen magnetischen Wegsensor 22. Abschließend wird die Motorbaugruppe auf dem Basisdämpfer montiert.

Es ist alternativ denkbar, die Gewindespindel mit Selbsthemmung auszuführen. In diesem Fall ist es entbehrlich, den Aktuator 44 zu bestromen, wenn der Reibungsdämpfer in einer Freilaufanordnung gemäß Fig. 2 und 5 angeordnet ist, in der eine minimale bzw. keine Reibungswirkung vorliegt. Um eine Überführung in einen Sicherungszustand zu gewährleisten, kann das Zurückschalten in den Zustand maximaler Reibungswirkung durch einen elektrischen Schaltvorgang ermöglicht werden, der insbesondere dadurch ausgeführt wird, dass eine elektrische Energiereserve in einem elektrischen Speicherelement, insbesondere in einem Kondensator, zur Verfügung gestellt wird.

## Patentansprüche

1. Reibungsdämpfer umfassend
a. ein eine Längsachse (3) aufweisendes Gehäuse (2),
b. einen entlang der Längsachse (3) verlagerbaren Stößel (4),
c. eine Reibungs-Einheit (33) zum Erzeugen einer richtungsabhängigen Reibungskraft auf den Stößel (4), wobei die Reibungs-Einheit (33) mindestens einen an dem Stößel (4) reibend anliegenden Reibbelag (35) und einen Reibbelagsträger (34) umfasst, an dem der mindestens eine Reibbelag (35) gehalten ist, wobei der Reibbelagsträger (34) relativ zum Stößel (4) zwischen einer Auszugsposition und einer Einschubposition verlagerbar angeordnet ist,
d. eine Schalt-Einheit (43) zum veränderlichen Festlegen der Reibungskraft, wobei die Schalt-Einheit (43) umfasst
i. einen schaltbaren Aktuator (44),
ii. ein Verriegelungselement (51),
iii. eine Kraftübertragungseinheit (47, 48, 50, 52), die mit dem Aktuator (44) und mit dem Verriegelungselement (51) mechanisch gekoppelt ist, wobei die Kraftübertragungseinheit (47, 48, 50, 52) eine Gewindespindel (50) umfasst,
wobei das Verriegelungselement (51) eine mit der Gewindespindel (50) zusammenwirkende Spindelmutter (52) aufweist, die integral an dem Verriegelungselement (51) ausgeführt ist.

2. Reibungsdämpfer gemäß Anspruch 1, **dadurch gekennzeichnet, dass** das Verriegelungselement (51) mindestens eine Anlagefläche (61) aufweist, mit der das Verriegelungselement (51) in der verriegelten Anordnung an mindestens einer Verriegelungsfläche (42) des Reibbelagsträgers (34) anliegt.

3. Reibungsdämpfer gemäß einem der vorstehenden Ansprüche, **dadurch gekennzeichnet, dass** das Verriegelungselement (51) als linear, insbesondere senkrecht zur Kippachse (41), verlagerbares Schiebeelement ausgeführt ist.

4. Reibungsdämpfer gemäß einem der vorstehenden Ansprüche, **dadurch gekennzeichnet, dass** das Verriegelungselement (51) eine Öffnung (58) für ein kollisionsfreies Verlagern des Verriegelungselements (51) entlang der Längsachse (3) aufweist.

5. Reibungsdämpfer gemäß einem der vorstehenden Ansprüche, **dadurch gekennzeichnet, dass** der Aktuator (44) als Elektromotor, insbesondere als Gleichstrommotor, ausgeführt ist.

6. Reibungsdämpfer gemäß einem der vorstehenden Ansprüche, **dadurch gekennzeichnet, dass** die Kraftübertragungseinheit (47, 48, 50, 52) ein Getriebe (47, 48), insbesondere ein Untersetzungsgetriebe, umfasst.

7. Reibungsdämpfer gemäß einem der vorstehenden Ansprüche, **dadurch gekennzeichnet, dass** die Gewindespindel (50) mit Selbsthemmung ausgeführt ist.

8. Reibungsdämpfer gemäß einem der Ansprüche 1 bis 6, **dadurch gekennzeichnet, dass** die Gewindespindel (50) ohne Selbsthemmung ausgeführt ist.

9. Reibungsdämpfer gemäß einem der vorstehenden Ansprüche, **gekennzeichnet durch** eine Ausfallsicherungs-Einheit (62) für eine Failsafe-Funktion des Reibungsdämpfers zum Anordnen des Verriegelungselements (51) in einer verriegelten Anordnung an dem Reibbelagsträger (34) derart, dass eine maximale richtungsunabhängige Reibungskraft wirkt.

10. Reibungsdämpfer gemäß einem der vorstehenden Ansprüche, **dadurch gekennzeichnet, dass** der Reibbelagsträger (34) um eine Kippachse (41) kippbar im Gehäuse (2) angeordnet ist, wobei die Kippachse (41) quer zur Längsachse (3) angeordnet ist.

11. Reibungsdämpfer gemäß einem der vorstehenden Ansprüche, **dadurch gekennzeichnet, dass** der Reibbelagsträger (34) mindestens eine Reibbelagsaufnahme (36) aufweist, in der der mindestens eine Reibbelag (35) angeordnet ist, wobei insbesondere zwei Reibbeläge (35) vorhanden sind, die insbesondere jeweils eine Halbschalenkontur aufweisen.

12. Reibungsdämpfer gemäß einem der vorstehenden Ansprüche, **dadurch gekennzeichnet, dass** der Reibbelagsträger (34) eine Durchgangsöffnung (37) aufweist, durch die der Stößel (4) geführt ist, wobei die Durchgangsöffnung (37) eine senkrecht zur Längsachse (3) zumindest abschnittsweise unsymmetrische Kontur aufweist.

13. Reibungsdämpfer gemäß einem der vorstehenden Ansprüche, **dadurch gekennzeichnet, dass** der Reibbelagsträger (34) eine Durchgangsöffnung (37) aufweist, durch die der Stößel (4) geführt ist, wobei die Reibbelagsaufnahme (36) als Vertiefung in der Durchgangsöffnung (37) ausgebildet ist.

14. Reibungsdämpfer gemäß einem der vorstehenden Ansprüche, **dadurch gekennzeichnet, dass** der Reibungsdämpfer (1) ein, insbesondere an dem Gehäuse (2) angeordnetes, erstes Befestigungselement (26) und ein, insbesondere an dem Stößel (4) angeordnetes, zweites Befestigungselement (25) zur Befestigung an zueinander beweglichen Teilen aufweist.

15. Reibungsdämpfer gemäß einem der vorstehenden Ansprüche, **gekennzeichnet durch** eine Sensoreinheit (14), die insbesondere einen Wegsensor (22) umfasst, und einen Weggeber, dessen Axialposition bezüglich der Längsachse (3) mittels der Sensoreinheit (14) erfasst wird, wobei der Weggeber (13) insbesondere an dem Stößel (4) gehalten ist.

## Claims

1. Friction damper comprising
a. a housing (2) having a longitudinal axis (3),
b. a plunger (4) that can be displaced along the longitudinal axis (3),
c. a friction unit (33) for producing a direction-dependent frictional force on the plunger (4), wherein the friction unit (33) comprises at least one friction lining (35) that is in frictional contact with the plunger (4) and a friction lining support (34), on which the at least one friction lining (35) is held, wherein the friction lining support (34) is arranged so as to be displaceable relative to the plunger (4) between a pull-out position and an insertion position,
d. a switching unit (43) for variable setting of the frictional force, wherein the switching unit (43) comprises
i. a switchable actuator (44),
ii. a locking element (51),
iii. a force transmission unit (47, 48, 50, 52), which is mechanically coupled to the actuator (44) and to the locking unit (51), wherein the force transmission unit (47, 48, 50, 52) comprises a threaded spindle (50),
wherein the locking element (51) has a spindle nut (52) that interacts with the threaded spindle (52) and is designed integrally on the locking element (51).

2. Friction damper according to claim 1, **characterised in that** the locking element (51) has at least one contact surface (61) with which the locking element (51) rests against at least one locking surface (42) of the friction lining support (34) in the locked arrangement.

3. Friction damper according to one of the preceding claims, **characterised in that** the locking element (51) is designed as a sliding element that can be moved linearly, in particular perpendicular to the pivot axis (41).

4. Friction damper according to one of the preceding claims, **characterised in that** the locking element (51) has an opening (58) for collision-free displacement of the locking element (51) along the longitudinal axis (3).

5. Friction damper according to one of the preceding claims, **characterised in that** the actuator (44) is designed as an electric motor, in particular as a dc motor.

6. Friction damper according to one of the preceding claims, **characterised in that** the force transmission unit (47, 48, 50, 52) comprises a gear (47, 48), in particular a reduction gear.

7. Friction damper according to one of the preceding claims, **characterised in that** the threaded spindle (50) is designed with self-locking.

8. Friction damper according to one of claims 1 to 6, **characterised in that** the threaded spindle (50) is designed without self-locking.

9. Friction damper according to one of the preceding claims, **characterised by** a fail-safe unit (62) for a fail-safe function of the friction damper for arranging the locking element (51) in a locked arrangement on the friction lining support (34) in such a way that a maximum direction-dependent frictional force is applied.

10. Friction damper according to one of the preceding claims, **characterised in that** the friction lining support (34) is arranged in the housing (2) so as to be pivotable about a pivot axis (41), wherein the pivot axis (41) is arranged transverse to the longitudinal axis (3).

11. Friction damper according to one of the preceding claims, **characterised in that** the friction lining support (34) has at least one friction lining receptacle (36), in which the at least one friction lining (35) is arranged, wherein in particular two friction linings (35) are present, which have in particular respectively have a half-shell contour.

12. Friction damper according to one of the preceding claims, **characterised in that** the friction lining support (34) has a passage opening (37) through which the plunger (4) is guided, wherein the passage opening (37) has a contour that is at least partially asymmetrical perpendicular to the longitudinal axis (3).

13. Friction damper according to one of the preceding claims, **characterised in that** the friction lining support (34) has a passage opening (37) through which the plunger (4) is guided, wherein the friction lining receptacle (36) is designed as a recess in the passage opening (37).

14. Friction damper according to one of the preceding claims, **characterised in that** the friction damper (1) has a first fastening element (26) arranged in particular on the housing (2) and a second fastening element (25) arranged in particular on the plunger (4) for fastening to moving parts.

15. Friction damper according to one of the preceding claims, **characterised by** a sensor unit (14), which in particular comprises a displacement sensor (22), and a position encoder whose axial position with respect to the longitudinal axis (3) is detected by means of the sensor unit (14), wherein the position encoder (13) is held in particular on the plunger (4).

## Revendications

1. Amortisseur à friction comprenant
a. un boîtier (2) présentant un axe longitudinal (3),
b. un poussoir (4) déplaçable le long de l'axe longitudinal (3),
c. une unité de friction (33) destinée à générer une force de friction directionnelle sur le poussoir (4), l'unité de friction (33) comprenant au moins une garniture de friction (35) en contact de friction avec le poussoir (4) et un support de garniture de friction (34) sur lequel est maintenue l'au moins une garniture de friction (35), le support de garniture de friction (34) étant agencé déplaçable par rapport au poussoir (4) entre une position d'extraction et une position d'insertion,
d. une unité de commutation (43) pour la définition variable de la force de friction, l'unité de commutation (43) comprenant
i. un actionneur (44) commutable,
ii. un élément de verrouillage (51),
iii. une unité de transmission de force (47, 48, 50, 52), qui est couplée mécaniquement à l'actionneur (44) et à l'élément de verrouillage (51), l'unité de transmission de force (47, 48, 50, 52) comprenant une tige filetée (50),
l'élément de verrouillage (51) présentant un écrou de tige (52) coopérant avec la tige filetée (50), ledit écrou de tige étant réalisé d'un seul tenant avec l'élément de verrouillage (51).

2. Amortisseur à friction selon la revendication 1, **caractérisé en ce que** l'élément de verrouillage (51) présente au moins une surface d'appui (61) avec laquelle l'élément de verrouillage (51) s'applique, dans l'arrangement verrouillé, sur au moins une surface de verrouillage (42) du support de garniture de friction (34).

3. Amortisseur à friction selon l'une des revendications précédentes, **caractérisé en ce que** l'élément de verrouillage (51) est conçu sous la forme d'un élément coulissant déplaçable de manière linéaire, en particulier perpendiculairement à l'axe de basculement (41).

4. Amortisseur à friction selon l'une des revendications précédentes, **caractérisé en ce que** l'élément de verrouillage (51) présente une ouverture (58) pour un déplacement sans collision de l'élément de verrouillage (51) le long de l'axe longitudinal (3).

5. Amortisseur à friction selon l'une des revendications précédentes, **caractérisé en ce que** l'actionneur (44) est conçu sous la forme d'un moteur électrique, en particulier d'un moteur à courant continu.

6. Amortisseur à friction selon l'une des revendications précédentes, **caractérisé en ce que** l'unité de transmission de force (47, 48, 50, 52) comprend un mécanisme de transmission (47, 48), en particulier un réducteur.

7. Amortisseur à friction selon l'une des revendications précédentes, **caractérisé en ce que** la tige filetée (50) est conçue avec blocage automatique.

8. Amortisseur à friction selon l'une des revendications 1 à 6, **caractérisé en ce que** la tige filetée (50) est conçue sans blocage automatique.

9. Amortisseur à friction selon l'une des revendications précédentes, **caractérisé par** une unité de sécurité en cas de défaut (62) pour une fonction de sécurité intégrée de l'amortisseur à friction en vue de l'agencement de l'élément de verrouillage (51) dans un arrangement verrouillé sur le support de garniture de friction (34) de telle manière qu'une force de friction non directionnelle maximale agit.

10. Amortisseur à friction selon l'une des revendications précédentes, **caractérisé en ce que** le support de garniture de friction (34) est agencé dans le boîtier (2) de manière basculable autour d'un axe de basculement (41), l'axe de basculement (41) étant agencé transversalement à l'axe longitudinal (3).

11. Amortisseur à friction selon l'une des revendications précédentes, **caractérisé en ce que** le support de garniture de friction (34) présente au moins un logement de garniture de friction (36) dans lequel est agencée l'au moins une garniture de friction (35), deux garnitures de friction (35), présentant en particulier chacune un contour en demi-coque, étant en particulier présentes.

12. Amortisseur à friction selon l'une des revendications précédentes, **caractérisé en ce que** le support de garniture de friction (34) présente une ouverture de passage (37) à travers laquelle le poussoir (4) est guidé, l'ouverture de passage (37) présentant, perpendiculairement à l'axe longitudinal (3), un contour asymétrique au moins sur certaines parties.

13. Amortisseur à friction selon l'une des revendications précédentes, **caractérisé en ce que** le support de garniture de friction (34) présente une ouverture de passage (37) à travers laquelle le poussoir (4) est guidé, le logement de garniture de friction (36) étant réalisé sous la forme d'un renfoncement dans l'ouverture de passage (37).

14. Amortisseur à friction selon l'une des revendications précédentes, **caractérisé en ce que** l'amortisseur à friction (1) présente un premier élément de fixation (26), en particulier agencé sur le boîtier (2), et un second élément de fixation (25), en particulier agencé sur le poussoir (4), pour la fixation sur des pièces mobiles l'une par rapport à l'autre.

15. Amortisseur à friction selon l'une des revendications précédentes, **caractérisé par** une unité de détection (14), qui comprend en particulier un capteur de déplacement (22) et un transmetteur de déplacement, dont la position axiale par rapport à l'axe longitudinal (3) est détectée au moyen de l'unité de détection (14), le transmetteur de déplacement (13) étant en particulier maintenu sur le poussoir (4).
